# EUROPEAN PATENT SPECIFICATION

(11) **EP 1 193 606 B1**
(45) Date of publication and mention of the grant of the patent: **12.05.2004**
(21) Application number: 01000501.5
(22) Date of filing: 26.09.2001
(51) Int. Cl.: G06F 13/28

(54) **Apparatus and method for a host port interface unit in a digital signal processing unit**
Gerät und Verfahren für eine Hauptrechnersportschnitstelleneinheit in einer Einrichtung zur digitalen Signalverarbeitung
Dispositif et méthode pour une unité d'interface avec un système hôte dans un dispositif de traitement numérique de signaux

(30) Priority: 27.09.2000 US 670665
(43) Date of publication of application: 03.04.2002
(73) Proprietor: Texas Instruments Incorporated, Dallas, Texas 75251 (US)
(72) Inventor: Smith, Patrick J., Texas 77027, Houston (US); Jones, Jason A., Richmond, TX 77469 (US)
(74) Representative: Holt, Michael

(56) References cited:
- EP-A- 0 486 145
- US-A- 5 535 417

## Description

### RELATED APPLICATIONS

U.S. Patent Application Serial No. 09/670,663; APPARATUS AND METHOD FOR THE TRANSFER OF SIGNAL GROUPS BETWEEN DIGITAL SIGNAL PROCESSORS IN A DIGITAL SIGNAL PROCESSING UNIT; invented by Patrick J. Smith, Jason A. Jones and Kevin A. McGonagle; filed contemporaneously herewith and assigned to the assignee of the present application: U.S. Patent Application Serial No. 09/670,664: APPARATUS AND METHOD FOR ACTIVATION OFA DIGITAL SIGNAL PROCESSOR IN AN IDLE MODEFOR INTERPROCESSOR TRANSFER OF SIGNALGROUPS IN A DIGITAL SIGNAL PROCESSING UNIT; invented by Patrick J. Smith, Jason A. Jones, and Kevin A. McGonagle; filed contemporaneously herewith and assigned to the assignee of the present application: U.S. Patent Application Serial No. 09/670,666; APPARATUS AND METHOD FOR THE EXCHANGE OFSIGNAL GROUPS BETWEEN A PLURALITY COMPONENTS AND A DIRECT MEMORY ACCESS CONTROLLER IN A DIGITAL SIGNAL PROCESSSOR; invented by Patrick J. Smith, Jason A. Jones, Kevin A. McGonagle, and Tai H. Nguyen; filed contemporaneously herewith and assigned to the assignee of the present application. U.S. Patent Application Serial No. 09/670,667; APPARATUS AND METHOD FOR A SORTING MODE IN A DIRECT MEMORY ACCESS CONTROLLEROF A DIGITAL SIGNAL PROCESSOR; invented by Patrick Smith and Tai H. Nguyen; filed contemporaneously herewith and assigned to the assignee of the present application: and U.S. Patent Application Serial No. 09/670,668; APPARATUS AND METHOD FOR ADDRESS MODIFICATION IN A DIRECT MEMORY ACCESS CONTROLLER; invented by Patrick Smith; filed contemporaneously herewith and assigned to the assignee of the present application are each related applications.

### TECHNICAL FIELD OF THE INVENTION

This invention relates generally to the data processing apparatus and, more particularly, to the specialized high performance processor units generally referred to as digital signal processing units. The invention involves the interaction of a digital signal processor with components external to the digital signal processor without the use of a serial port.

### Background of the Invention

Digital signal processing units have been developed as specialized data processing units. These units are optimized to perform routine, albeit complex, operations with great efficiency. For many applications, the computations need to done in as close to real time as possible. In order to achieve the computational speed required of the digital signal, the digital signal processing units are optimized to perform the specified processing operation(s) with great efficiency. In addition, many of the functions that would be performed by a central processing unit in a general purpose processing unit are eliminated or the funtionality performed outside of the core processing unit in a digital signal processor.

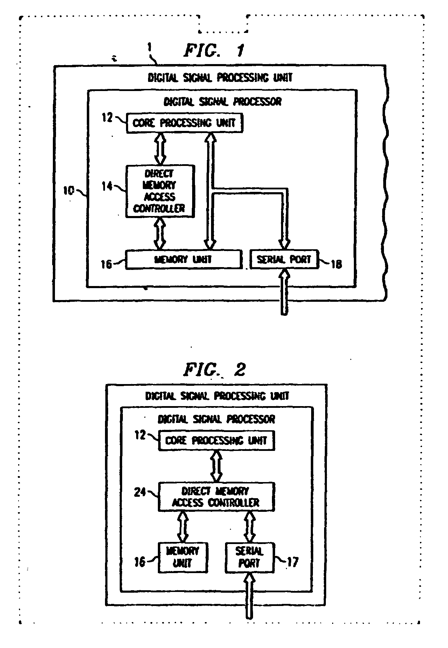

Referring to Fig. 1, a digital signal processing unit 1 having a digital signal processor, according to the prior art, is shown. A digital signal processor 10 includes a core processing unit 12 (frequently referred to as a processing core), a direct memory access unit 14, a memory unit or memory units 16, and a serial port or serial ports 18. The memory unit 16 stores the signal groups that are to be processed or that assist in the processing of the signal groups being processed by the core processing unit 12. The core processing unit 12 performs the bulk of the processing of signal groups in the memory unit 16. The direct memory access unit 14 is coupled to the core processing unit 12 and to memory unit 16 and mediates the signal group exchange therebetween. The serial port 18 exchanges signal groups with components external to the digital signal processing unit 1. The core processing unit 12 is coupled to the serial port 18 and to the memory unit 16 and controls the exchange of signal groups between these components.

The digital signal processor is typically designed and implemented to have limited functionality, but functions that must be repeated and performed rapidly. The fast Fourier transform calculation and the Viterbi algorithm decoding are two examples where digital signal processors have been utilized with great advantage. To insure that the digital signal processors operate with high efficiency, the core processing is generally optimized for the performance of the limited functionality. Part of the optimization process involves the off-loading, to the extent possible, any processing not directed toward the optimized function. The exchange of signal groups involving the core processing unit and the memory unit has been assigned to the direct memory access unit.

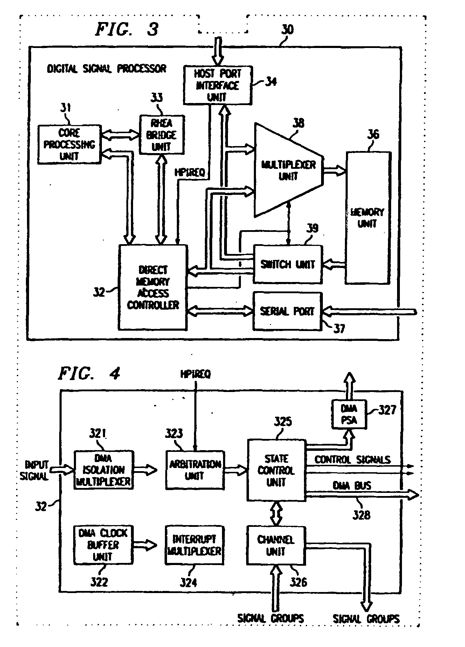

More recently, the direct memory access controller has been implemented to control the exchange of data groups between the serial port and the memory unit. This implementation of a digital signal processor is described in the co-pending U.S. Patent Application entitled APPARATUS AND METHOD FOR THE EXCHANGE OFSIGNAL GROUPS BETWEEN A PLURALITY COMPONENTS AND A DIRECT MEMORY ACCESS CONTROLLER IN A DIGITAL SIGNAL PROCESSSOR, cited as a related Application. Referring to Fig. 2, the digital signal processor 10 includes a core processing unit 12, a direct memory access controller 24, a memory unit 16, and a serial port 18, the same components as in the prior art digital signal processors shown in Fig. 1. The difference between the embodiments in Fig. 1 and Fig 2 is as follows. In Fig. 1, the direct memory access controller 14, control the exchange of signal groups between the memory unit 16, and the core processing unit 12. In Fig. 2, the direct memory access controller 24 controls not only the exchange of signal groups between the memory unit 16, and the core processing unit 12, but also controls the exchange of signal groups between the memory unit 16 and the serial port 18. With this implementation, the core processing unit 12 is relieved of further processing responsibilities, as compared to the implementation shown in Fig. 1. For example, the core processing unit is not involved in the transfer of signal groups between the memory unit 16 and the serial port 18. Thus, the core processing unit 12 can be further optimized to perform specified processing operations.

The use of the direct memory access controller 24 unit in controlling the exchange of signal groups between the memory unit 16 and the serial port 18 removes a large processing burden from the core processing unit. For example, the direct memory access controller 24 must be able to provide source and destination addresses for a variety of addressing modes. The possible addressing modes include a frame mode, a circular buffer memory mode, and a sorting mode (i.e., to sort the related signal groups belonging to a single frame from a multiplicity of blocks in a time-division multiplexed mode).

The serial port provides for an exchange of signal groups between the digital signal processor and external components. However, in many situations, signal groups are originally formatted in parallel groups of signals. This format requires a conversion to a serial format prior to entry of these signal groups into the digital signal processing unit via the serial port 18. One of the external components that communicates with the digital signal processor, but which functions using parallelly formatted signal groups is a microcontroller unit. In order to achieve increased computational efficiency, a microcontroller unit is coupled to one or more digital signal processing units. In this way, the microcontroller unit can make use of the specialized computational capabilities of the digital signal processing units. To achieve increased computational efficiency, the microcontroller unit must be able to communicate (i.e., exchange signal groups) with the digital signal processor unit(s) to provide coordination and control signal groups. The requirement that microcontroller communicate through the serial port compromises the very increases in computational efficiency that the coupling of the microcontroller to at least one digital signal processor was meant to achieve.

A need has therefore been felt for apparatus and an associated method having the feature that signal groups in a parallel format can be directly exchanged with the digital signal processor. It would be a further feature of the apparatus and associated method that the signal groups in a parallel format be exchanged without delay. It would be yet another feature of the apparatus and method that a parallelly formatted signal group to or from an external component be exchanged with the digital signal processor without appreciable impact upon operation of the core processing unit.

### SUMMARY OF THE INVENTION

The present invention is defined by an apparatus according to claim 1 and by a method according to claim 6.

The aforementioned and other features are accomplished by providing the digital signal processor with a host port interface unit. The host port interface unit receives parallelly formatted signal groups to be stored in the memory unit from an external component, typically a microcontroller. Address signal groups accompany the signal groups to be stored in the memory unit. The host interface unit provides a signal to an arbitration unit of the direct memory access controller. The arbitration unit is programmed to give the host processor interface unit the priority status. The arbitration unit applies a signal indicating the result of the arbitration process to the state control unit in the direct memory access controller. After any current activity is ended, the state control unit provides ownership of the dma bus to the host interface unit. The signal groups from the host port interface unit are stored directly in the memory unit without being transmitted through the direct memory access controller. The host interface unit stores or fetches signal groups at a location determined by address signal groups in the host processor interface unit. Once the host processor interface unit has completed the activity, the control of the signal exchange within the digital signal processing unit is returned to the direct memory controller. The host port interface unit can retrieve signal groups from the memory unit at addresses stored by the host interface unit.

### BRIEF DESCRIPTION OF THE DRAWINGS

For a more complete understanding of the present invention, and the advantages thereof, reference is now made to the following detailed description of certain particular and illustrative embodiments and the features and aspects thereof, by way of example only, and with reference to the figures of the accompanying drawings in which:
Figure 1 is a block diagram of a digital signal processing unit according to the prior art.
Figure 2 is a block diagram of a more recent embodiment of a digital signal processing unit.
Figure 3 is a block diagram of a preferred embodiment of a digital signal processor capable of utilizing the present invention.
Figure 4 is a block diagram of a direct memory access controller capable of advantageously using the present invention.
Figure 5 is a timing diagram illustrating the relationship of selected direct memory access controller signals during an operation involving the host port processor interface unit.

The use of the same reference symbols in different drawings indicates similar or identical items.

### DETAILED DESCRIPTION OF THE FIGURES

Fig. 1 and Fig. 2 have been discussed with respect to the to the background of the invention.

Referring next to Fig. 3, a block diagram of a digital signal processor 30, according to the preferred embodiment of the invention, is shown. The core processing unit 31 performs the principal processing functions of digital signal processor 30. The core processing unit 31 is generally optimized in both hardware and in software to perform a limited number of processing functions extremely efficiently. The memory unit 36 stores the signal groups that the core processing unit requires for the processing functions. The serial port 37 exchanges signal groups with components outside of the digital signal processing unit. The rhea bridge unit 33 provides an interface between a memory-mapped register bank in the core processing unit 31 and control (context) registers in the direct memory access controller 32. The host port interface unit 34 exchanges signal groups with external components, typically a microcontroller. The direct memory access controller 36 exchanges signal with the serial port 37. The direct memory access controller 36 applies signal groups to multiplexer 38 and receives signals from switch 37. The host port interface unit 34 applies signals to the multiplexer unit 38 and receives signal groups from the switch unit 39. The switch unit 39 and the multiplexer unit 38 receive control signals from the direct memory access controller 32. The direct memory access controller 32 receives a HPIREQ signal from the host port interface unit 34.

Referring to Fig. 4, a block diagram of the principal components of a direct memory access controller 32, according to the preferred embodiment of the present invention, is shown. The direct memory access controller 32 includes dma isolation multiplexer 321, a clock buffer unit 322, an arbitration unit 323, an interrupt multiplex unit 324, a state control unit 325, a channel unit 326, a PSA unit 327 and a dma bus 328. The dma isolation multiplexer 321 includes the logic components to isolate the input signals to the direct memory access controller 32 for testing purposes. The clock buffer unit 322 contains logic to correct for the skew of the external (i.e. to the digital signal processor) clock signal. The clock signal is then distributed throughout the direct memory access unit 32. The interrupt multiplexer unit 324 provides synchronous interrupts to the core processing unit of the digital signal processor. The arbitration unit 323 includes apparatus responsive to bids for control of one of the channels to select a user of the channel unit 326 and the control of the dma bus 328. The PSA unit 326 is a calculator for testing and for debugging the direct memory access controller 32. The state control unit 325 selects the state (configuration) of the direct memory access controller 32 and applies the control signals that implement the machine configuration. The dma bus 328 includes leads for carrying, control signal groups and address signal groups determined by the state control unit 325. The dma bus 328 also includes the signal groups that are being transferred within the digital signal processing unit 30. However, in Fig. 4, these signal groups are shown as entering and leaving the channel unit 326. The channel unit 326, under control of the state control unit 325, couples the source component of the signal groups to be transferred within the digital signal processor 30 with the destination component. The arbitration unit 323 receives the HPIREQ signal from the host port interface unit 34 and applies the result of the arbitration process to the state control unit 325. The state control unit 325 generates the control signal that are applied to multiplexer unit 38 and switch unit 39.

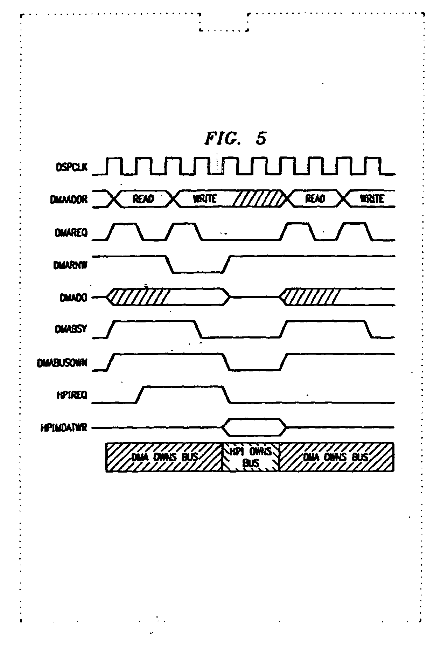

Referring to Fig. 5, a timing diagram illustrating the relationship of signals in the digital signal processing unit are shown. For reference, the digital signal processor clock (DSPCLK) signal is shown. The DMAADDR, i.e., address, signal illustrates the normal operation of the direct memory access unit. The hatched lines in the DMAADDR signal indicate when the host port interface unit is transferring signal groups. The DMAREQ, i.e. request, signal indicates the typical request signals within the direct memory access controller. The DMARNW i.e., read-not-write, signal insures that the appropriate read or write operation is being performed. The DMABSY, i.e., busy, signal is present during a normal read or write operation in the direct memory access controller. The DMADO, i.e., data out, signal is active during a write operation, the signal groups being placed on the dma bus by the direct memory access controller. The DMABUSOWN, i.e., the (dma) bus ownership, signal is active when a typical direct memory access operation is being performed. The HPIREG signal is the signal by which the host port interface unit indicates that an operation involving the memory unit is requested. The HPIMDATWR, i.e., data being read or written, signal indicates that the host port processor is active.

The operation of the host port processor and the digital signal processor can be understood as follows. The host port processor receives address signal groups. For a write operation, the address signal groups are accompanied by signal groups to be stored in the memory unit. Otherwise, the address signal groups indicates memory locations to be read. The host port interface unit then applies a request signal to the arbitration unit of the direct memory access unit. Because the host port interface unit has priority, as soon as the present operation is complete, the host port processor unit will gain control of the bus. The control is the result of the arbitration unit applying the results of the arbitration procedure to the state control unit. The state control unit provides control signal that disable the direct memory access unit, through the dma bus, from interacting with the memory unit. Note that in the preferred embodiment, only one signal group transfer is possible even though a plurality of channels in the channel unit is available. The host port interface unit is therefore free to transfer signal groups to or from the memory unit. Once again, the transfer of signal groups does not take place, as do the typical signal group transfers, through the direct memory access controller. Rather the transfer of signal groups is implemented directly between the memory unit and the host port interface unit.

In Fig. 3, a multiplexer unit 38 and a switch unit 39 are shown for permitting either the host port processor 34 or direct memory access controller 32, but not both simultaneously, to interact with the memory unit 36. These elements provide a particularly clear illustration of one technique for making this selection. However, it will be clear that other techniques for selecting or disabling a group of signals can provide the same result.

In a digital signal processing unit a digital signal processor is provided that includes a memory unit and a direct access memory controller. The direct memory access controller controls the access to the memory unit. An interface unit is also provided that comprises a storage unit for storing signal groups; and a signal generating apparatus responsive to signal groups from an external component being stored in the storage unit for applying a control signal to the direct memory access controller, the direct memory access controller coupling the host port processor to the memory unit.
The signal groups from the external component have a parallel format and may include at least address signal groups. The interface unit may also include an arbitration apparatus, the control signal having the highest priority. The external component is a microcontroller.

## Claims

1. A digital signal processor comprising:
a memory unit for storing signal groups;
a core processing unit for processing signal groups stored in the memory unit;
a serial port for exchanging serially formatted signal groups with external components;
an host port interface unit for exchanging parallelly formatted signal groups with external components and for generating a control signal; and
a direct memory access controller for controlling the exchange of signal groups between the core processing unit, the memory unit, the serial port and the host port interface unit, the direct memory access controller comprising;
an arbitration unit for receiving the control signal from the host port interface unit and for generating a selected signal group in response to the control signal; and
a state control unit for providing predetermined signals in response to the selected signal group, said predetermined signals used for coupling the host port interface unit to the memory unit and for uncoupling the direct memory access controller from the memory unit.

2. The digital signal processor as recited in claim 1, wherein the arbitration unit is arranged for assigning the control signal from the host port interface unit a highest priority, and wherein the transfer of the signal groups between the host port interface unit and the memory unit is the next signal group transfer.

3. The digital signal processor as recited in claim 1, wherein the host port interface unit is arranged for receiving signals in a parallel format from an external component.

4. The digital signal processor as recited in claim 3, wherein host port interface unit is arranged for receiving signal groups from a microcontroller.

5. The digital signal processor as recited in claim 4, wherein the signal groups received from the microprocessor include address signal groups.

6. A method for exchanging signal groups between an external component and a memory unit of a digital signal processor, the method comprising:
applying at least address signal groups to a host port interface unit of the digital signal processor by the external component;
generating a control signal when signal groups are received by the host port interface unit;
applying the control signal to a direct memory access unit of the digital signal processor; and
uncoupling the memory unit from the direct memory access unit in response to the control signal.

7. The method as recited in claim 6, wherein the uncoupling step includes the step of arbitrating between the control signal and other requests for access to the direct memory management unit.

8. The method as recited in claim 6, wherein the external component is a microcontroller.

9. The method as recited claim 6, wherein only one of the host port interface unit and the direct memory access unit is coupled to the memory unit at any time.

## Patentansprüche

1. Digitaler Signalprozessor, der folgendes umfasst:
eine Speichereinheit für das Speichern von Signalgruppen;
eine Kernverarbeitungseinheit für die Verarbeitung von in der Speichereinheit gespeicherten Signalgruppen;
eine serielle Schnittstelle für den Austausch von seriell formatierten Signalgruppen mit externen Komponenten;
eine Host-Port-Schnittstelleneinheit für den Austausch von parallel formatierten Signalgruppen mit externen Komponenten und für das Erzeugen eines Steuersignals; und
ein DMA-Controller für die Steuerung des Austauschs von Signalgruppen zwischen der Kernverarbeitungseinheit, der Speichereinheit, der seriellen Schnittstelle und der Host-Port-Schnittstelleneinheit, wobei der DMA-Controller folgendes umfasst:
eine Arbitrationseinheit für den Empfang des Steuersignals von der Host-Port-Schnittstelle und für das Erzeugen einer ausgewählten Signalgruppe in Reaktion auf das Steuersignal; und
eine Zustandssteuerungseinheit für die Bereitstellung von vorher festgelegten Signalen in Reaktion auf die ausgewählten Signalgruppen, wobei die vorher festgelegten Signale dazu verwendet werden, die Host-Port-Schnittstelleneinheit mit der Speichereinheit zu koppeln und den DMA-Controller von der Speichereinheit zu entkoppeln.

2. Digitaler Signalprozessor wie in Anspruch 1 angegeben, bei dem die Arbitrationseinheit so angeordnet ist, dass sie dem Steuersignal von der Host-Port-Schnittstelleneinheit höchste Priorität zuordnet, und bei dem der Transfer der Signalgruppen zwischen der Host-Port-Schnittstelleneinheit und der Speichereinheit den nächsten Signalgruppen-Transfer darstellt.

3. Digitaler Signalprozessor wie in Anspruch 1 angegeben, bei dem die Host-Port-Schnittstelleneinheit so angeordnet ist, dass sie Signale in einem parallelen Format von einer externen Komponente empfangen kann.

4. Digitaler Signalprozessor wie in Anspruch 3 angegeben, bei dem die Host-Port-Schnittstelleneinheit so angeordnet ist, dass sie Signalgruppen von einem Mikrocontroller empfangen kann.

5. Digitaler Signalprozessor wie in Anspruch 4 angegeben, bei dem die vom Mikroprozessor empfangenen Signalgruppen Adressen-Signalgruppen umfassen.

6. Verfahren für den Austausch von Signalgruppen zwischen einer externen Komponente und einer Speichereinheit eines digitalen Signalprozessors, das folgendes umfasst:
Anlegen von zumindest Adress-Signalgruppen an eine Host-Port-Schnittstelleneinheit des digitalen Signalprozessors durch die externe Komponente;
Erzeugen eines Steuersignals wenn Signalgruppen von der Host-Port-Schnittstelleneinheit empfangen werden;
Anlegen des Steuersignals an eine DMA-Einheit des digitalen Signalprozessors; und
Entkopplung der Speichereinheit von der DMA-Einheit in Reaktion auf das Steuersignal.

7. Verfahren wie in Anspruch 6 angegeben, bei dem der Entkopplungsschritt auch den Schritt der Vermittlung zwischen dem Steuersignal und anderen Anforderungen für Zugriff auf die DMA-Einheit umfasst.

8. Verfahren wie in Anspruch 6 angegeben, bei dem die externe Komponente ein Mikrocontroller ist.

9. Verfahren wie in Anspruch 6 angegeben, bei dem zu jedem Zeitpunkt entweder nur die Host-Port-Schnittstelleneinheit oder die DMA-Einheit mit der Speichereinheit gekoppelt ist.

## Revendications

1. Processeur de signaux numériques, comprenant :
un module de mémoire pour stocker des groupes de signaux ;
un module principal de traitement pour traiter des groupes de signaux stockés dans le module de mémoire ;
un port série pour échanger des groupes de signaux au format série avec des composants extérieurs ;
un module d'interface de port principal pour échanger des groupes de signaux au format parallèle avec des composants extérieurs et pour produire un signal de commande ; et
un dispositif de commande d'accès direct en mémoire pour commander l'échange de signaux entre le module principal de traitement, le module de mémoire, le port série et le module d'interface de port principal, le dispositif de commande d'accès direct en mémoire comprenant :
un module d'arbitrage pour recevoir le signal de commande depuis le module d'interface de port principal et pour produire un groupe sélectionné de signaux en réponse au signal de commande ; et
un module de commande d'état pour fournir des signaux prédéterminés en réponse au groupe sélectionné de signaux, lesdits signaux prédéterminés étant utilisés pour coupler le module d'interface de port principal au module de mémoire et pour découpler le dispositif de commande d'accès direct en mémoire d'avec le module de mémoire.

2. Processeur de signaux numériques selon la revendication 1, dans lequel le module d'arbitrage est disposé pour affecter au signal de commande issu du module d'interface de port principal la priorité la plus élevée, et dans lequel le transfert des groupes de signaux entre le module d'interface de port principal et le module de mémoire est le transfert suivant de groupes de signaux.

3. Processeur de signaux numériques selon la revendication 1, dans lequel le module d'interface de port principal est disposé pour recevoir des signaux dans un format parallèle d'un composant extérieur.

4. Processeur de signaux numériques selon la revendication 3, dans lequel le module d'interface de port principal est disposé pour recevoir des groupes de signaux d'un microcalculateur.

5. Processeur de signaux numériques selon la revendication 4, dans lequel les groupes de signaux reçus du microprocesseur comprennent des groupes de signaux d'adresse.

6. Procédé pour échanger des groupes de signaux entre un composant extérieur et un module de mémoire d'un processeur de signaux numériques, le procédé consistant à :
appliquer au moyen du composant extérieur au moins des groupes de signaux d'adresse à un module d'interface de port principal du processeur de signaux numériques ;
produire un signal de commande quand des groupes de signaux sont reçus par le module d'interface de port principal ;
appliquer le signal de commande à un module d'accès direct en mémoire du processeur de signaux numériques ; et
découpler le module de mémoire d'avec le module d'accès direct en mémoire en réponse au signal de commande.

7. Procédé selon la revendication 6, dans lequel l'étape de découplage comprend l'étape d'arbitrage entre le signal de commande et d'autres demandes d'accès au module de gestion directe en mémoire.

8. Procédé selon la revendication 6, dans lequel le composant extérieur est un microcontroleur.

9. Procédé selon la revendication 6, dans lequel seul un parmi le module d'interface de port principal et le module d'accès direct en mémoire est couplé au module de mémoire à tout instant.
